(19) Europäisches Patentamt
European Patent Office
Office européen des brevets

(11) EP 3 320 051 B1

(12) FASCICULE DE BREVET EUROPEEN

(45) Date de publication et mention de la délivrance du brevet:
**17.04.2019 Bulletin 2019/16**

(21) Numéro de dépôt: **16750880.3**

(22) Date de dépôt: **05.07.2016**

(51) Int Cl.:
***C09D 183/06*** (2006.01) ***C09D 183/10*** (2006.01)
***C08G 77/14*** (2006.01) ***C08G 77/20*** (2006.01)
***C08G 77/38*** (2006.01)

(86) Numéro de dépôt international:
**PCT/FR2016/000114**

(87) Numéro de publication internationale:
**WO 2017/005993 (12.01.2017 Gazette 2017/02)**

(54) **PROCEDE DE PREPARATION D'ORGANOPOLYSILOXANES AVEC DES FONCTIONS (METH)ACRYLATES**

VERFAHREN ZUR HERSTELLUNG VON (METH)ACRYLATGRUPPEN AUFWEISENDEN ORGANOPOLYSILOXANEN

PROCESS FOR THE PREPARATION OF ORGANOPOLYSILOXANES COMPRISING (METH)ACRYLATE FUNCTIONAL GROUPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2015 FR 1501425**

(43) Date de publication de la demande:
**16.05.2018 Bulletin 2018/20**

(73) Titulaire: **ELKEM SILICONES France SAS**
**69003 Lyon (FR)**

(72) Inventeur: **MALIVERNEY, Christian**
**69690 Saint Julien sur Bibost (FR)**

(74) Mandataire: **Mekki, Boualem et al**
**Elkem Silicones France SAS**
**Industrial Property Department**
**55, rue des Frères Perret**
**69192 Saint Fons (FR)**

(56) Documents cités:
**EP-A1- 2 574 638** **US-A- 4 324 873**
**US-A- 4 777 233** **US-A1- 2001 056 157**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 320 051 B1

Printed by Jouve, 75001 PARIS (FR)

## Description

La présente invention concerne un procédé de préparation d'organopolysiloxanes fonctionnalisés par des groupes (méth)acrylates, de préférence acrylates. Pour l'ensemble du document il faut comprendre que les groupes (méth)acrylates comprennent les groupes acrylates, les groupes méthacrylates ou un mélange des deux.

Ces fonctionnalités (méth)acrylates sont présentes dans des radicaux hydrocarbonés liés à la chaîne polysiloxane par une liaison Si-C qui peut être présente dans la chaîne ou en bout de chaîne. Ces fonctions ester d'acide (méth)acrylique sont aptes à réagir par voie radicalaire sous activation actinique et/ou thermique selon un mécanisme de polymérisation par polyaddition.

Ces organopolysiloxanes à fonction (méth)acrylate sont largement utilisés dans des compositions silicones réticulables par voie radicalaire pour produire un élastomère, qui peuvent être éventuellement enduites en couche mince sur un support souple qui est en textile, en papier, en polychlorure de vinyle (PVC), en polyester, en polypropylène, en polyamide, en polyéthylène, en polyéthylène téréphtalate (PET), en polyuréthanne ou en fibres de verre non tissés.

L'enduction de formulations silicones sur des supports souples vise de nombreuses applications. Par exemple, lorsque le support souple est un textile, des propriétés d'hydrofugation sont visées ou lorsque le support est un papier ou un polymère de type PVC ou PET des propriétés d'anti-adhérence sont le plus souvent recherchées.

Les revêtements anti-adhérents sont utiles pour de nombreuses applications où il est nécessaire de rendre non- adhérent à d'autres matériaux une surface ou un matériau qui normalement adhérerait à eux. Par exemple, les compositions silicones sont utilisées comme revêtements pour papiers anti-adhérents et peuvent ainsi être associées à des éléments adhérents pouvant être facilement libérés sans perdre leurs propriétés adhérentes, ces éléments pouvant être des adhésifs sensibles à la pression pour étiquettes, stratifiés décoratifs, ruban de transfert, etc. Les revêtements anti-adhérents à base de silicone appliqués sur papier, polyéthylène, polypropylène, polyester et autres supports de ce type, sont également utiles comme surfaces anti-adhérentes pour des produits à usage alimentaire et notamment dans le secteur de l'emballage industriel.

Il existe par conséquent depuis longtemps un fort intérêt pour ces organopolysiloxanes à fonction (méth)acrylate et leur préparation peut s'envisager de différentes manières décrites dans l'art antérieur.

Il est connu que ces organopolysiloxanes à fonction méth(acrylate) sont obtenus industriellement par réaction entre un organopolysiloxane fonctionnalisé par des groupes époxy et de l'acide (méth)acrylique en présence d'un catalyseur à base de chrome. L'acide (méth)acrylique réagit avec le groupe époxy pour former un monoester de l'acide (méth)acrylique comportant un groupe hydroxyle en position vicinale. Cette réaction est par exemple décrite dans l'article « Makromol. Chem., RAPID COMMUN. 7, 703-707 (1986) » où un organopolysiloxane avec des fonctions époxy en bout de chaîne réagit avec l'acide méthacrylique en présence du di-isopropyle salicylate de chrome pour former un organopolysiloxane $\alpha,\omega$-bis(méthacrylate). Le brevet EP 1276825-B1 nous enseigne également la préparation d'organopolysiloxanes à fonction acrylate par réaction entre un organopolysiloxane ayant des fonctionnalités époxy et l'acide acrylique en présence d'acétate de chrome(III). Ces deux catalyseurs à base de chrome et les sels de chrome (III) en général présentent l'inconvénient de pouvoir contenir du chrome (VI) qui est considéré comme potentiellement cancérigène. Il est donc nécessaire de trouver des catalyseurs tout aussi efficaces que les sels de Cr(III) mais ne présentant pas de problèmes de toxicité. Ces traces de Cr (VI) peuvent se retrouver sur toutes les applications où sont mis en oeuvre les organopolysiloxanes à fonction acrylate. Ce problème est d'autant plus critique pour toutes les applications où les revêtements anti-adhérents sont en contact avec des produits alimentaires.

D'autres types de catalyseurs sont connus pour catalyser cette réaction entre un organopolysiloxane fonctionnalisé par des groupes époxy et l'acide (méth)acrylique. Ainsi les brevets US 4908274, US4293678, US 4558082 et la demande de brevet EP 0269114 nous enseignent l'utilisation de catalyseurs organiques comme les amines (tributylamine, triméthylamine, benzyldiméthylamine), la tétraméthylguanidine, des dérivés de l'acide sulfonique, l'acide trifluoroacétique ou la morpholine et ses dérivés. Par exemple, une diamine cyclique comme le 1,4-diazabicyclo(2,2,2)octane est largement exemplifiée comme catalyseur pour cette réaction. Mais, à la lecture des exemples il apparaît que malgré des durées de réaction très élevées (de l'ordre de 30 heures), les rendements réactionnels ne sont pas quantitatifs.

Le brevet EP 2 574 638 décrit un procédé de préparation d'un organopolysiloxane comprenant un groupe fonctionnel (meth)acrylate impliquant la réaction d'un polyorganosiloxane comprenant un groupe époxy avec de l'acide (méth)acrylique en présence d'une base en tant que catalyseur et éventuellement en présence d'un solvent. Le catalyseur employé est KOH ou NaOH. Après modification par l'acide (méth)acrylique, l'organopolysiloxane est mis en solution dans un solvent.

Le brevet US 4 777 233 revendique un procédé de préparation d'organopolysiloxanes comprenant des groupes acryloxy utilisés dans la préparation de revêtements. En particulier, un organopolysiloxane comprenant des groupes époxy est mis en solution dans du xylène et réagit avec de l'acide acrylique en présence d'un catalyseur tel qu'un acide ou une amine.

Le brevet US 2001056157 divulgue la préparation de revêtements par réticulation de compositions comprenant des composés siloxanes. Les composés organopolysiloxanes réagissent avec un composé de type acide carboxylique

(acide acrylique) en présence d'un catalyseur tel que l'acétylacétonate de fer ou l'acétylacétonate de cobalt.

Le brevet US 4 324 873 décrit un procédé de préparation de compositions comprenant un organopolysiloxane comprenant une fonction hydroxyle et une résine époxy. Les compositions sont réticulées en présence d'un composé organique métallique dérivé du fer, aluminium ou vanadium et comprenant une partie organique telle que l'acétylacétonate (catalyseur).

Dans ce contexte, l'un des objectifs essentiels de la présente invention est de mettre au point un procédé de préparation d'organopolysiloxanes fonctionnalisés par des groupes (méth)acrylates qui n'emploie pas de catalyseurs toxiques ou susceptibles de se transformer aisément en produit toxique et en particulier ne contenant pas de catalyseurs à base de chrome,

Un autre objectif essentiel de la présente invention est de fournir un procédé de préparation d'organopolysiloxanes fonctionnalisés par des groupes (méth)acrylates avec un rendement et une cinétique compatibles avec une production industrielle. Un autre objectif essentiel de cette invention est de fournir un procédé de préparation d'organopolysiloxanes fonctionnalisés par des groupements (méth)acrylates où la longueur de chaîne des organopolysiloxanes n'est pas modifiée, c'est-à-dire où il n'y a pas de réactions de coupure et redistribution de liaisons siloxane (raccourcissement de chaînes) ni de réaction de pontage (allongement des chaînes) par exemple par la réaction secondaire entre un époxyde et la fonction hydroxyle de l'hydroxylacrylate ou par la polymérisation des époxydes.

Un autre objectif de cette invention est de fournir un procédé pour réaliser un revêtement silicone sur un substrat. On souhaite obtenir des substrats revêtus qui ne présentent pas de problèmes de toxicité.

Tous ces objectifs, parmi d'autres, sont atteints par la présente invention qui concerne un procédé pour la préparation d'un organopolysiloxane A comportant au moins un groupe (méth)acrylate, ledit procédé comprenant les étapes suivantes:

a) on fait réagir à une température comprise entre 50 et 140°C, de préférence entre 70 et 130°C :

- au moins un organopolysiloxane B comprenant au moins un groupe époxy,
- avec de l'acide acrylique ou de l'acide méthacrylique ou un mélange des deux,
- en présence d'un catalyseur C qui est un complexe de fer au degré d'oxydation (III) de formule (1) suivante :

$$[Fe(L^1)_3] \qquad (1)$$

  dans laquelle les symboles $L^1$, identiques ou différents, représentent un ligand choisi parmi le groupe constitué par : un anion β-dicarbonylato ou l'anion énolate d'un composé β-dicarbonylé, un anion carboxylate et un anion alcoolate, et
- d'au moins un solvant, et

b) on isole le produit obtenu qui est ledit organopolysiloxane A ou un mélange contenant majoritairement ledit organopolysiloxane A.

Par mélange contenant majoritairement ledit organopolysiloxane A on entend un mélange comprenant au moins 85% en poids d'organopolysiloxane A, de préférence au moins 90% en poids d'organopolysiloxane A et encore plus préférentiellement au moins 95% en poids d'organopolysiloxane A.

Le procédé de préparation d'un organopolysiloxane A comportant au moins un groupe (méth)acrylate selon l'invention présente l'avantage de ne pas modifier la longueur de chaîne de l'organopolysiloxane B de départ tout en ayant un rendement et une cinétique compatible avec une production industrielle. De plus, ce procédé présente l'avantage de ne pas utiliser de catalyseurs toxiques ou susceptibles de se transformer en produit toxique et en particulier ce procédé n'emploie pas de catalyseurs à base de chrome,

L'homme du métier saura ajuster la durée de réaction de l'étape a) du procédé selon l'invention en fonction de la température et de la concentration en catalyseur C mise en oeuvre pour obtenir le taux de conversion souhaité. Selon un mode préférentiel de l'invention, la durée de l'étape a) est comprise entre une et dix heures lorsque la température de l'étape a) est comprise entre 70 et 130°C.

L'organopolysiloxane A obtenu par le procédé de l'invention comprend des motifs siloxyles **(I.2), (I.3),** et éventuellement **(I.1)** de formules suivantes:

$$Y_a Z^1_b SiO_{\frac{4-(a+b)}{2}} \qquad \textbf{(I.1)}$$

$$Z^2_c SiO_{\frac{4-c}{2}} \quad \textbf{(I.2)}$$

$$V_d Z^1_e SiO_{\frac{4-(d+e)}{2}} \quad \textbf{(I.3)}$$

dans lesquelles :

- a= 1 ou 2, b= 0, 1 ou 2 et a+b= 1, 2 ou 3,
- c = 1, 2 ou 3,
- d= 1 ou 2, e= 0, 1 ou 2 et d+e= 1, 2 ou 3
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle,
- les symboles V, identiques ou différents, représentent un groupe hydrocarboné comprenant un groupe (méth)acrylate, ledit groupe hydrocarboné V ayant de préférence de 5 à 23 atomes de carbone inclus, et,
- ledit organopolysiloxane **A** comprend, par molécule, au moins deux atomes de silicium et au moins un motif siloxyle **(I.3).**

L'organopolysiloxane **B** comprend des motifs siloxyles **(I.4)** et **(I.5)** de formules suivantes:

$$Y_a Z^1_b SiO_{\frac{4-(a+b)}{2}} \quad \textbf{(I.4)}$$

et

$$Z^2_c SiO_{\frac{4-c}{2}} \quad \textbf{(I.5)}$$

dans lesquelles :

- a= 1 ou 2, b= 0, 1 ou 2 et a+b= 1, 2 ou 3,
- c = 1, 2 ou 3,
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle, et
- ledit organopolysiloxane **B** comprend, par molécule, au moins deux atomes de silicium et au moins un motif siloxyle **(I.4).**

De préférence, pour le motif siloxyle **(I.4)** le symbole Y est choisi parmi le groupe constitué par les groupes hydrocarbonés **(R-1)** à **(R-6)** de formules suivantes :

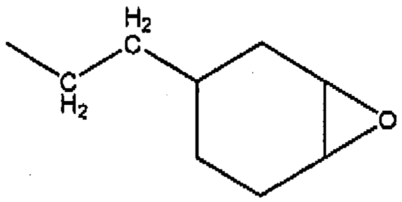

**(R-1)**

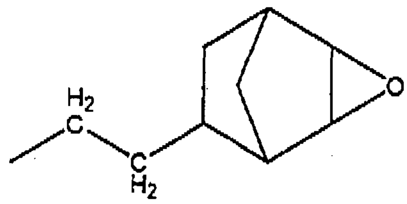

**(R-2)**

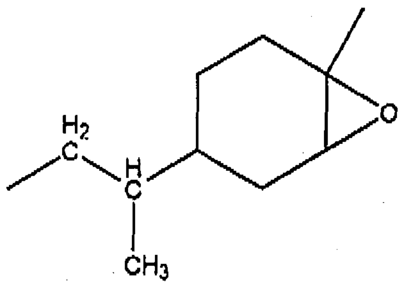

**(R-3)**

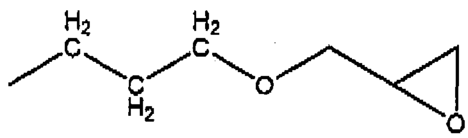

**(R-4)**

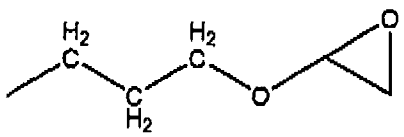

**(R-5)**

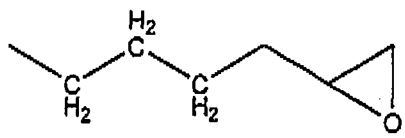

**(R-6)**

Selon un mode de réalisation particulièrement préféré, dans le motif siloxyle **(I.4)** le symbole Y est le groupe hydrocarboné **(R-4)** de formule suivante :

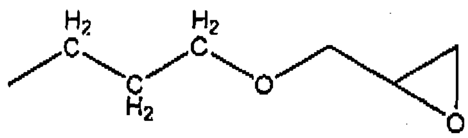

**(R-4)**

Ces organopolysiloxanes B peuvent présenter une structure linéaire, ramifiée, ou cyclique et leur degré de polymérisation est compris entre 2 et 5000, de préférence entre 2 et 1000 et encore plus préférentiellement entre 2 et 500.

De préférence l'organopolysiloxane **B** a une structure linéaire et comprend des motifs siloxyles **(I.4)** et **(I.5)** de formules suivantes:

$$Y_a Z^1_b SiO_{\frac{4-(a+b)}{2}} \qquad \textbf{(I.4)}$$

$$Z^2_c SiO_{\frac{4-c}{2}} \qquad \textbf{(I.5)}$$

dans lesquelles :

- a= 1 ou 2, b= 0, 1 ou 2 et a+b= 2 ou 3,
- c = 2 ou 3,
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle, et
- ledit organopolysiloxane **B** comprenant, par molécule, au moins deux atomes de silicium et au moins un motif siloxyle **(I.4).**

Lorsqu'il s'agit d'un polymère linéaire, l'organopolysiloxane **B** est essentiellement constitué de motifs siloxyles « D » choisis parmi le groupe constitué par les motifs siloxyles $Y_2SiO_{2/2}$, $YZ^1SiO_{2/2}$ et $Z^2{}_2SiO_{2/2}$, et de motifs siloxyles « M » choisis parmi le groupe constitué par les motifs siloxyles $Y_3SiO_{1/2}$, $YZ^1{}_2SiO_{1/2}$, $Y_2Z^1SiO_{1/2}$ et $Z^2{}_3SiO_{1/2}$. Les symboles Y, $Z^1$ et $Z^2$ sont tels que décrits ci-dessus.

Selon un mode préféré de l'invention, l'organopolysiloxane B est essentiellement constitué de motifs siloxyles « D » choisis parmi le groupe constitué par les motifs siloxyles $YZ^1SiO_{2/2}$ et $Z^2{}_2SiO_{2/2}$, et de motifs siloxyles « M » choisis parmi le groupe constitué par les motifs siloxyles $YZ^1{}_2SiO_{1/2}$ et $Z^2{}_3SiO_{1/2}$. Les symboles Y, $Z^1$ et $Z^2$ sont tels que décrits ci-dessus.

L'organopolysiloxane **B** présente une viscosité dynamique mesurée à 25°C avec un rhéomètre à contrainte imposée de type Brookfield comprise entre 1 et 100000 mPa.s, de préférence entre 10 et 50000 mPa.s. et encore plus préférentiellement entre 10 et 10 000 mPa.s.

Selon un mode préférentiel de l'invention, l'organopolysiloxane **B** contient par molécule de 1 à 100 motifs siloxyle **(I.4)** porteurs d'au moins un groupe hydrocarboné comprenant un groupe époxy. Selon un mode plus préférentiel l'organopolysiloxane **B** contient par molécule de 2 à 50 motifs siloxyle **(I.4).**

Selon un autre mode de réalisation l'organopolysiloxane **B** contient de 1 à 60% poids de groupes hydrocarbonés Y comprenant un groupe époxy, de préférence de 1 à 30% poids et encore plus préférentiellement de 1 à 15% poids.

Selon un mode préférentiel de mise en oeuvre du procédé selon l'invention, l'organopolysiloxane B est choisi parmi les composés de formules **(B-1)** à **(B-4)** suivantes :

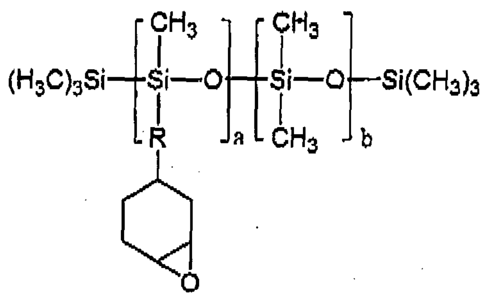

**(B-1)** dans laquelle **R** est un groupe alkyle comprenant de 2 à 5 atomes de carbone, a est compris entre 2 et 50 et b est compris entre 20 et 400.

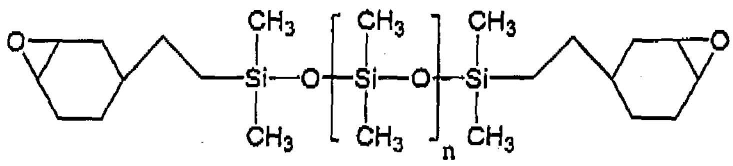

**(B-2)** dans laquelle n est compris entre 0 et 250.

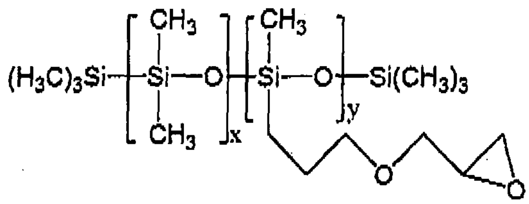

**(B-3)** dans laquelle x est compris entre 10 et 300 et y est compris entre 2 et 30.

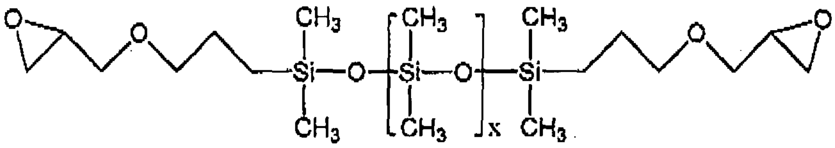

**(B-4)** dans laquelle x est compris entre 0 et 250.

Selon les applications envisagées pour l'organopolysiloxane **A,** un taux de conversion des fonctions époxy de l'organopolysiloxane **B** total ou partiel peut être recherché. Il peut ainsi être obtenu un organopolysiloxane **A** comprenant des fonctions époxy et des fonctions (méth)acrylate qui peut être utilisé par exemple comme modulateur d'adhésion ou comme promoteur d'adhésion ou un organopolysiloxane **A** comprenant uniquement ou essentiellement des fonctions (méth)acrylate utilisé par exemple comme constituant essentiel des compositions silicones réticulables par voie radicalaire pour produire un élastomère. Le ratio molaire **R** entre l'acide (méth)acrylique et les fonctions époxy de l'organopolysiloxane **B** mis en oeuvre dans le procédé sera adapté en conséquence.

Selon un mode de réalisation de l'invention, ce ratio **R** est compris entre 0,1 et 10, de préférence entre 0,5 et 5 et encore plus préférentiellement entre 0,5 et 2.

Le catalyseur **C** est un complexe de fer au degré d'oxydation (III) de formule **(1)** suivante :

$[Fe(L^1)_3]$ **(1)**

dans laquelle les symboles $L^1$, identiques ou différents, représentent un ligand choisi parmi le groupe constitué par : un anion β-dicarbonylato ou l'anion énolate d'un composé β-dicarbonylé, un anion carboxylate et un anion alcoolate.

De préférence l'anion β-dicarbonylato ou l'anion énolate d'un composé β-dicarbonylé est un anion dérivé d'un composé de formule (**2**):

$R^1COCHR^2COR^3$ **(2)**

dans laquelle :

- $R^1$ et $R^3$, identiques ou différents, représentent un radical hydrocarboné en $C_1$-$C_{30}$ linéaire, cyclique ou ramifié, un aryle contenant entre 6 et 12 atomes de carbone, ou un radical $-OR^4$ avec $R^4$ qui représente un radical hydrocarboné en $C_1$-$C_{30}$ linéaire, cyclique ou ramifié,
- $R^2$ est un atome d'hydrogène ou un radical hydrocarboné, de préférence alkyle, comprenant de 1 à 4 atomes de carbone ; avec
- $R^1$ et $R^2$ peuvent être reliés pour former un cycle en $C_5$-$C_6$, et
- $R^2$ et $R^4$ peuvent être reliés pour former un cycle en $C_5$-$C_6$.

Avantageusement, l'anion β-dicarbonylato ou l'anion énolate d'un composé β-dicarbonylé est un anion dérivé d'une β-dicétone choisie dans le groupe constitué par: 2,4-pentanedione (*acac*); l'hexanedione-2,4; heptanedione-2,4; heptanedione-3,5; l'éthyl-3 pentanedione-2,4; méthyl-5 hexanedione-2,4; octanedione-2,4; octanedione-3,5; diméthyl-5,5 hexanedione-2,4; méthyl-6 heptanedione-2,4; diméthyl-2, 2 nonanedione-3,5; diméthyl-2,6 heptanedione-3,5; 2-acétylcyclohexanone (*Cy-acac*); 2,2,6,6-tétraméthyl-3,5-heptanedione (*TMHD*); 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

Selon une autre disposition préférée de réalisation de l'invention, l'anion β-dicarbonylato ou l'anion énolate d'un composé β-dicarbonylé est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique ou ceux décrit dans la demande de brevet FR-A-1435882.

Selon un mode préférentiel de mise en oeuvre du procédé de l'invention, le catalyseur C est un complexe de fer au degré d'oxydation (III) de formule **(1)** suivante :

$$[Fe(L^1)_3] \qquad \textbf{(1)}$$

dans laquelle les symboles $L^1$, identiques ou différents, représentent un ligand choisi parmi le groupe constitué par un anion carboxylate et un anion alcoolate et encore plus préférentiellement le catalyseur C est un carboxylate de fer(III) ou un alcoolate de fer(III).

Selon un mode de réalisation de l'invention, le catalyseur C est un carboxylate de fer (III) de formule **(1)** dans laquelle les symboles $L^1$ sont des ligands, identiques ou différents, choisis dans le groupe des anions carboxylates, ayant de 1 à 40 atomes de carbone.

Les ligands carboxylates $\mathbf{L^1}$ utiles selon l'invention sont par exemple :

- les anions dérivés des acides carboxyliques aliphatiques tels que les anions: méthanoate ou formiate $[H\text{-}COO]^-$, éthanoate ou acétate $[CH_3\text{-}COO]^-$, propanoate ou propionate $[CH_3CH_2\text{-}COO]^-$, butanoate ou butyrate $[CH_3\text{-}(CH_2)_2\text{-}COO]^-$, pentanoate ou valerate $[CH_3\text{-}(CH_2)_3\text{-}COO]^-$, hexanoate ou caproate $[CH_3\text{-}(CH_2)_4\text{-}COO]^-$, heptanoate $[CH_3\text{-}(CH_2)_5\text{-}COO]^-$, octanoate $[CH_3\text{-}(CH_2)_6\text{-}COO]^-$, 2-éthylhexanoate $[CH_3\text{-}(CH_2)_4\text{-}CH(C_2H_5)\text{-}COO]^-$, nonanoate $[CH_3\text{-}(CH_2)_7\text{-}COO]^-$, décanoate $[CH_3\text{-}(CH_2)_8\text{-}COO]^-$, undécanoate $[CH_3\text{-}(CH_2)_9\text{-}COO]^-$, dodécanoate ou laurate $[CH_3\text{-}(CH_2)_{10}\text{-}COO]^-$, tridécanoate $[CH_3\text{-}(CH_2)_{11}\text{-}COO]^-$, tétradécanoate ou myristate $[CH_3\text{-}(CH_2)_{12}\text{-}COO]^-$, pentadécanoate $[CH_3\text{-}(CH_2)_{13}\text{-}COO]^-$, hexadécanoate ou palmitate $[CH_3\text{-}(CH_2)_{14}\text{-}COO]^-$, heptadécanoate $[CH_3\text{-}(CH_2)_{16}\text{-}COO]^-$, octadécanoate ou stéarate $[CH_3\text{-}(CH_2)_{16}\text{-}COO]^-$, nonadécanoate $[CH_3\text{-}(CH_2)_{17}\text{-}COO]^-$, éicosanoate $[CH_3\text{-}(CH_2)_{18}\text{-}COO]^-$, hénéicosanoate $(CH_3\text{-}(CH_2)_{10}\text{-}COO]^-$, docosanoate ou béhénate $[CH_3\text{-}(CH_2)_{20}\text{-}COO]^-$, tricosanoate $[CH_3\text{-}(CH_2)_{21}\text{-}COO]^-$, tétracosanoate ou lignocérate $[CH_3\text{-}(CH_2)_{22}\text{-}COO]^-$, pentacosanoate $[CH_3\text{-}(CH_2)_{23}\text{-}COO]^-$, hexacosanoate $[CH_3\text{-}(CH_2)_{24}\text{-}COO]^-$, acide heptacosanoate $[CH_3\text{-}(CH_2)_{25}\text{-}COO]^-$, octacosanoate $[CH_3\text{-}(CH_2)_{26}\text{-}COO]^-$, nonacosanoate $[CH_3\text{-}(CH_2)_{27}\text{-}COO]^-$, triacontanoate $[CH_3\text{-}(CH_2)_{28}\text{-}COO]^-$, hentriacontanoate $[CH_3\text{-}(CH_2)_{29}\text{-}COO]^-$, dotriacontanoate $[CH_3\text{-}(CH_2)_{30}\text{-}COO]^-$, palmitoléate $[CH_3\text{-}(CH_2)_5\text{-}CH{=}CH\text{-}(CH_2)_7\text{-}COO]^-$, oléate $[CH_3(CH_2)_7CH{=}CH(CH_2)_7COO]^-$. linoléate $[CH_3\text{-}(CH_2)_4\text{-}(CH{=}CHCH_2)_2\text{-}(CH_2)_6\text{-}COO]^-$, linolénate $[CH_3\text{-}CH_2\text{-}(CH{=}CHCH_2)_3\text{-}(CH_2)_6\text{-}COO]^-$, arachidonate $[CH_3\text{-}(CH_2)_4\text{-}(CH{=}CHCH_2)_4\text{-}(CH_2)_2\text{-}COO]^-$,
- les anions dérivés des acides carboxyliques aliphatiques substitués tels que par exemple le néopentanoate ou pivalate $[(CH_3)_3C\text{-}COO]^-$, le néononanoate $[(CH_3)_3C\text{-}(CH_2)_4\text{-}COO]^-$, ou encore les isomères de structure en $C_{10}$ suivants, pris seuls ou en mélange (néodécanoate): 7,7-diméthyloctanoate $[(CH_3)_3C\text{-}(CH_2)_5\text{-}COO]^-$, 2,2-diméthyloctanoate $[CH_3\text{-}(CH_2)_5\text{-}C(CH_3)_2\text{-}COO]^-$, 2,2,3,6-tétraméthylhexanoate $[(CH_3)_2CH\text{-}CH_2\text{-}CH(CH_3)\text{-}C(CH_3)_2\text{-}COO]^-$, 2,5-diméthyl-2-éthylhexanoate $[(CH_3)_2CH\text{-}(CH_2)_2\text{-}C(CH_3)(C_2H_5)\text{-}COO]^-$, 2,2-diéthylhexanoate $[CH_3\text{-}(CH_2)_3\text{-}C(C_2H_5)_2\text{-}COO]^-$, 2,4-diméthyl-2-isopropylpentanoate $[(CH_3)_2CH\text{-}CH_2\text{-}C(CH_3)(i\text{-}propyl)\text{-}COO]^-$,
- les anions carboxylates correspondant de l'acide VersaticTM 10 (vendu par la société Momentive) de formule brute $[C_{10}H_{19}O_2]^-$ et de formule linéaire $[(R_1)(R_2)C(CH_3)\text{-}COO]^-$ avec les symboles $R_1$ et $R_2$ qui sont des alkyles,
- les anions dérivés des acides carboxyliques aromatiques tels que les anions de type benzoate, phénylacétate, phénylpropionate ou phénylbutyrate,
- les anions dérivés des acides carboxyliques comprenant une insaturation comme l'anion acrylate, l'anion méthacrylate, et
- les anions naphténate.

Les anions naphthénates en $C_{10}$ à $C_{20}$ sont les anions correspondant des acides naphthéniques. Les acides naphthéniques sont des sous-produits de l'extraction des sables bitumineux et se retrouvent principalement dans les résidus de sables bitumineux. Les mélanges commerciaux d'acides naphthéniques sont utilisés comme solvants, détergents et agents de récupération de caoutchouc. Il peut s'agir de mélange d'acides carboxyliques monocycliques et/ou bicycliques.

Selon un mode de réalisation du procédé, il est préférable que les ligands n'aient pas un poids moléculaire trop élevé. Par conséquent, selon un mode préférentiel les ligands carboxylates ont de 1 à 20 atomes de carbone, et encore plus préférentiellement de 1 à 12 atomes de carbone.

Selon un mode de réalisation particulièrement avantageux, le catalyseur C est un carboxylate de fer au degré d'oxydation (III) choisi parmi le groupe constitué par l'acrylate de fer, le méthacrylate de fer, le pentanoate de fer, le stéarate de fer, le néononanoate de fer, le néodécanoate de fer, le naphténate de fer et le benzoate de fer et leurs mélanges. Plus préférentiellement, le catalyseur **C** est un carboxylate de fer au degré d'oxydation (III) choisi parmi le groupe constitué par l'acrylate de fer, le méthacrylate de fer, le néodécanoate de fer, le naphténate de fer et leurs

mélanges.

Il est important de noter que le carboxylate de fer(III) peut être généré in-situ, par exemple à partir d'un carboxylate de fer(II) qui dans le milieu réactionnel comprenant de l'acide (méth)acrylique va se transformer en carboxylate de fer(III).

Selon un autre mode de réalisation, le catalyseur **C** est un alcoolate de fer répondant à la formule (3) suivante :

$$Fe(OC_nH_{(2n+1)})_3 \qquad \textbf{(3)}$$

dans laquelle n est compris entre 1 et 6 et de préférence n est compris entre 2 et 5. De préférence les alcoolates de fer au degré d'oxydation (III) sont choisis parmi le groupe constitué par l'éthylate de fer, l'isopropylate de fer et le butylate de fer.

Selon un mode de réalisation, la concentration en catalyseur **C** exprimée en % molaire par rapport aux fonctions époxy de l'organopolysiloxane **B** est comprise entre 0,5 et 10%, de préférence entre 1 et 5% et encore plus préférentiellement entre 1 et 3%.

Selon un mode préféré de l'invention le solvant est un solvant **S1** choisi parmi les solvants polaires protiques, de préférence parmi les alcools primaires comprenant de 2 à 6 atomes de carbone et plus préférentiellement parmi le groupe constitué par l'éthanol, l'isopropanol, le butanol et leurs mélanges.

Selon un mode préféré de mise en oeuvre du procédé selon l'invention, l'étape a) a lieu en présence d'un solvant **S1** tel que décrit ci-dessus et d'un solvant **S2** qui est choisi parmi le groupe constitué par la méthylisobutylcétone, la méthyléthylcétone, le toluène, le xylène, le chlorobenzène et leurs mélanges.

La teneur totale en solvant mise en oeuvre à l'étape a) du procédé tel que décrit ci-dessus est comprise entre 5 et 50% massique, de préférence entre 5 et 40% massique et encore plus préférentiellement entre 10 et 30% massique, par rapport au poids total de la composition mise en oeuvre à ladite étape a) du procédé.

Sans vouloir être lié par une quelconque théorie le solvant **S1** permet de solubiliser le catalyseur **C** qui se présente majoritairement sous forme solide et le solvant **S2** améliore l'homogénéisation et le mélange du catalyseur **C** dissout dans le solvant **S1** avec l'organopolysiloxane **B.**

Selon un mode de réalisation de l'invention à l'étape b) le produit est isolé par dévolatilisation. Pour cela le milieu réactionnel issu de l'étape a) est chauffé à une température comprise entre 80 et 130°C sous pression réduite. Cette étape de dévolatilisation permet d'évaporer le(s) solvant(s) et l'acide (meth)acrylique en excès.

Selon un autre mode de réalisation, une étape de filtration peut en outre être réalisée avant ou après la dévolatilisation. De préférence, si une étape de filtration est ajoutée au procédé selon l'invention elle a lieu après la dévolatilisation.

Selon un mode préféré de mise en oeuvre du procédé selon l'invention, lors de l'étape a) on peut ajouter en outre un inhibiteur de polymérisation de l'acide (méth)acrylique. Les inhibiteurs de polymérisation de l'acide (méth)acrylique sont largement connus et à titre d'exemple nous pouvons citer les alkylphénols comme le méthoxyphenol et l'hydroquinone ou les alkyldiphénylamines comme par exemple la phénothiazine.

Selon un autre mode de réalisation, l'invention concerne un procédé pour la préparation d'un organopolysiloxane **A** comportant au moins un groupe (méth)acrylate, ledit procédé comprenant les étapes suivantes:

a) on fait réagir à une température comprise entre 50 et 140°C, de préférence entre 70 et 130°C :

- au moins un organopolysiloxane **B** comprenant au moins un groupe époxy,
- avec de l'acide acrylique ou de l'acide méthacrylique ou un mélange des deux,
- en présence d'un catalyseur **C** qui est un complexe de fer au degré d'oxydation (III) de formule (1) suivante :

$$[Fe(L_1)_3] \qquad (1)$$

dans laquelle les symboles $L_1$, identiques ou différents, représentent un ligand choisi parmi le groupe constitué par: un anion β-dicarbonylato ou l'anion énolate d'un composé β-dicarbonylé, un anion carboxylate et un anion alcoolate,
- d'au moins un solvant, et
- d'au moins un inhibiteur de polymérisation et

b) on isole le produit obtenu qui est ledit organopolysiloxane **A** ou un mélange contenant majoritairement ledit organopolysiloxane **A.**

Lors de la mise en oeuvre du procédé, il est possible mais pas nécessaire de réaliser les étapes a) et b) sous atmosphère inerte. Selon un mode de réalisation préféré, lorsqu'on met en oeuvre un composé phénolique comme

inhibiteur d'acide (méth)acrylique les étapes a) et b) du procédé seront mises en oeuvre sous air et encore plus préférentiellement sous un balayage d'air sec.

Un autre objet de l'invention concerne une composition **X** précurseur dudit organopolysiloxane **A** obtenu par le procédé tel que décrit ci-dessus et stable au stockage à une température de 20°C, comprenant :

- au moins un organopolysiloxane **B** comprenant au moins une fonction époxy,
- de l'acide acrylique ou de l'acide méthacrylique ou un mélange des deux,
- un catalyseur **C** qui est un complexe de fer au degré d'oxydation (III) de formule (1) suivante :

  $[Fe(L^1)_3]$ (1)

  dans laquelle les symboles $\mathbf{L^1}$, identiques ou différents, représentent un ligand choisi parmi le groupe constitué par : un anion β-dicarbonylato ou l'anion énolate d'un composé β-dicarbonylé, un anion carboxylate et un anion alcoolate, et
- au moins un solvant.

L'organopolysiloxane **B** et le catalyseur **C** étant tels que définis plus haut.

La composition **X** comprend au moins un solvant qui peut être un solvant $\mathbf{S_1}$ et/ou un solvant $\mathbf{S_2}$ tel que définis plus haut.

La composition **X** peut comprendre en outre un inhibiteur de polymérisation tel que décrit ci-dessus.

Selon un autre mode de réalisation, la composition **X** est constituée de :

- au moins un organopolysiloxane **B** comprenant au moins une fonction époxy,
- de l'acide acrylique ou de l'acide méthacrylique ou un mélange des deux,
- un catalyseur **C** qui est un complexe de fer au degré d'oxydation (III) de formule (1) suivante :

  $[Fe(L^1)_3]$ (1)

  dans laquelle les symboles $L^1$, identiques ou différents, représentent un ligand choisi parmi le groupe constitué par : un anion β-dicarbonylato ou l'anion énolate d'un composé β-dicarbonylé, un anion carboxylate et un anion alcoolate,
- au moins un solvant $\mathbf{S_1}$ et/ou un solvant $\mathbf{S_2}$, et
- éventuellement un inhibiteur de polymérisation.

L'organopolysiloxane **B,** le catalyseur **C** et les solvants $\mathbf{S_1}$ et $\mathbf{S_2}$ étant tels que définis plus haut.

Selon un autre mode de réalisation, la composition **X** est constituée de :

- au moins un organopolysiloxane **B** comprenant au moins une fonction époxy,
- de l'acide acrylique ou de l'acide méthacrylique ou un mélange des deux,
- un catalyseur C qui est un complexe de fer au degré d'oxydation (III) de formule (1) suivante :

  $[Fe(L^1)_3]$ (1)

  dans laquelle les symboles $L^1$, identiques ou différents, représentent un ligand choisi parmi le groupe constitué par : un anion β-dicarbonytato ou l'anion énolate d'un composé β-dicarbonylé, un anion carboxylate et un anion alcoolate,
- au moins un solvant $\mathbf{S_1}$ et/ou un solvant $\mathbf{S_2}$, et
- au moins un inhibiteur de polymérisation.

L'organopolysiloxane **B,** le catalyseur **C** et les solvants $\mathbf{S_1}$ et $\mathbf{S_2}$ étant tels que définis plus haut.

Selon un mode de réalisation de l'invention, dans la composition **X,** le ratio molaire **R** entre l'acide (méth)acrylique et les fonctions époxy de l'organopolysiloxane **B** est compris entre 0,1 et 10, de préférence entre 0,5 et 5 et encore plus préférentiellement entre 0,5 et 2.

Un dernier objet de l'invention concerne un procédé pour réaliser un revêtement sur un substrat comprenant les étapes suivantes :

a) on prépare un organopolysiloxane **A** selon le procédé tel que décrit ci-dessus,

b) on prépare une composition silicone **W** réticulable par voie radicalaire en ajoutant à l'organopolysiloxane **A :**

   i. un photoamorceur, et

ii. éventuellement un ou plusieurs additifs,

c) on applique ladite composition **W** sur un substrat, et
d) on fait réticuler ladite composition **W** par exposition à un rayonnement.

Selon un mode préféré de l'invention à l'étape d) le rayonnement est de la lumière ultraviolette de longueur d'onde inférieure à 400 nanomètres.
La durée d'irradiation peut être courte et elle est généralement inférieure à 1 seconde et est de l'ordre de quelques centièmes de seconde pour les faibles épaisseurs de revêtement. La réticulation obtenue est excellente même en l'absence de tout chauffage.
Selon un autre mode réalisation l'étape d) de réticulation a lieu à une température comprise entre 40 et 100°C.
Bien entendu, on peut régler le temps de durcissement notamment, par le nombre de lampes U.V. utilisées, par la durée d'exposition aux U.V. et par la distance entre la composition et la lampe U.V.
La quantité de composition **W** déposée sur le substrat est variable et s'échelonne le plus souvent entre 0,1 et 5 g/$m^2$ de surface traitée. Cette quantité dépend de la nature du support et des propriétés anti-adhérentes recherchées. Elle est le plus souvent comprise entre 0,5 et 1,5 g/$m^2$.
Ce procédé est particulièrement adapté pour préparer un revêtement silicone anti-adhérent sur un substrat qui est un support souple en textile, en papier, en polychlorure de vinyle, en polyester, en polypropylène, en polyamide, en polyéthylène, en polyéthylène téréphtalate, en polyuréthanne ou en fibres de verre non tissés.
Ces revêtements sont particulièrement adaptés pour leur utilisation dans le domaine de l'anti-adhérence.
Pour polymériser des organopolysiloxanes fonctionnalisées par des groupements (méth)acrylate, l'homme du métier saura choisir un photoamorceur radicalaire approprié absorbant les radiations lumineuses de longueur d'onde inférieure à 400 nm. Comme exemple de photoamorceurs radicalaires on peut citer: les $\alpha$-hydroxycétones, les benzoïnes éther et les cétones $\alpha$-amino aromatiques . A titre d'exemples de photoamorceur radicalaire, on citera notamment les produits suivants: isopropylthioxanthone ; benzophénone ; camphorquinone ; 9-xanthénone; anthraquinone ; 1-4 dihydroxyanthraquinone; 2-méthylanthraquinone; 2,2'-bis(3-hydroxy-1,4-naphtoquinone); 2,6-dihydroxyanthraquinone ; 1-hydroxycyclohexylphénylcétone; 1,5-dihydroxyanthraquinone; 1,3-diphényl-1,3-propanedione; 5,7-dihydroxyflavone; dibenzoylperoxyde; acide 2-benzoylbenzoique; 2-hydroxy-2-méthylpropiophénone; 2-phénylacétophénone; oxyde de 2,4,6-triméthylbenzoyldiphénylphosphine; anthrone; oxyde de bis(2,6 diméthylbenzoyl)-2,4,4-triméthylpentylphosphine ; 4,4'-diméthoxybenzoïne; phénanthrènequinone; 2-éthylanthraquinone; 2-méthylanthraquinone; 1,8-dihydroxyanthraquinone; dibenzoylperoxyde; 2,2-diméthoxy-2-phénylacétophénone; benzoïne; 2-hydroxy-2-méthylpropiophénone; benzaldéhyde; 4-(2-hydroxyéthoxy)phényl-(2-hydroxy-2-méthylpropyl) cétone; benzoylacétone, éthyl(2,4,6-trimethylbenzoyl)phenylphosphinate et leur mélanges.
A titre d'exemples de produits commerciaux de photoamorceurs radicalaires, on peut citer les produits commercialisés par la société CIBA-GEIGY : Irgacure® 369, Irgacure® 651, Irgacure® 907, Darocure® 1173, etc.
La quantité de photoamorceur dans la composition **W** est généralement comprise entre 0,001 et 5 parties en poids, le plus souvent entre 0,005 et 3 parties en poids pour 100 parties en poids de la composition **W.**
Comme additif, on peut inclure au moins un additif de régulation de la force de décollement d'une interface silicone/adhésif dans la composition qui est choisi parmi :

(i) les dérivés organiques (méth)acrylates, et
(ii) les silicones à fonction(s) (méth)acrylate(s),

Conviennent notamment comme dérivés organiques (méth)acrylates, les composés (méth)acrylates époxydés, (meth)acryloglycéropolyesters, (méth)acrylo-urétanes, (méth)acrylopolyéthers, (méth)acrylopolyesters, et (méth)acrylo-acryliques. Sont plus particulièrement préférés le triacrylate de triméthylolpropane, le diacrylate de tripropylène glycol et le tétraacrylate de pentaérythritol.
Selon une variante préférée de l'invention, l'additif utilisé est un silicone à fonction(s) (méth)acrylate(s). A titre représentatif de fonctions (méth)acrylates portées par le silicone et convenant tout particulièrement à l'invention, on peut plus particulièrement citer les dérivés acrylates, méthacrylates, éthers de (méth)acrylates et esters de méth(acrylates) liés à la chaîne polysiloxane par une liaison Si-C. De tels dérivés acrylates sont notamment décrits dans les brevets EP 281 718, FR 2 632 960 et EP 940 458.
D'autres additifs tels que des thiols ou des amines aromatiques peuvent être ajoutés pour accélérer la réticulation de la composition **W.**
La présente invention est illustrée ci-après par des exemples non limitatifs.

**Exemples** :

1 Screening des catalyseurs avec des mélanges modèle

Pour comparer l'efficacité des différentes espèces comme catalyseurs de réaction entre les fonctions époxy greffés sur un organopolysiloxane et l'acide (méth)acrylique, un mélange modèle a été utilisée pour pouvoir évaluer simultanément :

- le taux de conversion des fonctions époxy,
- le rendement en hydroxyacrylate qui est le produit recherché (isomères $\alpha$ et $\beta$) et en différents sous-produits
- les réactions de coupure de liaisons siloxane (raccourcissement de chaînes), et
- les réactions de pontage (allongement des chaînes) par réaction entre une fonction époxy et une fonction alcool de l'hydroxyacrylate ou par la polymérisation des époxy.

Différentes familles de composés ont été évaluées comme catalyseurs pour cette réaction.

D'une part, des catalyseurs organiques comme :

- la triéthylamine ou $Et_3N$,
- la N-méthylmorpholine ou 4-méthylmorpholine,
- la tétraméthylguanidine ou TMG,
- la triphénylphosphine ou $PPh_3$,
- le chlorure de tétrabutylammonium ou $Bu_4NCl$,
- le 1-éthylimidazole, et
- le bromure de 1-butyl-3-méthylimidazolium ou BMIBr,

D'autre part, différents sels métalliques comme :

- l'hydroxyde de Lithium ou LiOH,
- l'hydroxyde de potassium ou KOH,
- l'acrylate de magnésium ou $Mg(Acrylate)_2$,
- l'acétate de cérium ou $Ce(OAc)_3$,
- le titanate de butyle $Ti(OnBu)_4$,
- l'acrylate de zinc ou $Zn(Acrylate)_2$, et
- l'acrylate d'aluminium ou $Al(Acrylate)_3$.

Et notamment des composés du fer :

- l'acétylacétonate de fer (III) ou $Fe(acac)_3$,
- $Fe(octanoate)_{2,4}(R_{50})_{0,6}$ ou $Fe(oct)_{2,4}(R_{50})_{0,6}$ avec $R_{50}$ est l'anion benzoylstéaroylméthane,
- l'acrylate de fer (III) ou $Fe(Acrylate)_3$,
- l'éthylate de fer (III) ou $Fe(OCH_2CH_3)_3$,
- le trifluorométhanesulfonate de fer (III) ou $Fe(OTf)_3$,
- le pentanoate de fer (III) ou valérate de fer (III) ou $Fe(valerate)_3$,
- le 2-éthylhexanoate de fer (III) ou $Fe(2\text{-}EH)_3$,
- le stéarate de fer (III) ou octodecanoate de fer (III) ou $Fe(stearate)_3$,
- le benzoate de fer (III) ou $Fe(benzoate)_3$,
- le néopentanoate de fer (III) ou pivalate de fer (III) ou $Fe(pivalate)_3$,
- le néononanoate de Fer (III) ou $Fe(néononanoate)_3$,
- le néodécanoate de fer (III) ou $Fe(ND)_3$,
- le naphténate de fer (III) ou Fe(naphténate)3,
- l'oxyde de fer (III) ou $Fe_2O_3$,
- le chlorure de fer (III) ou $FeCl_3$, anhydre ou hydraté,
- l'hydroxyde de fer (III) ou $Fe(OH)_3$,
- du fer en poudre au degré d'oxydation zéro ou Fe°, et
- l'acétate de chrome $Cr(OAc)_3$ comme comparatif.

Si on utilise directement un organopolysiloxane comprenant des groupes époxy comme réactif, il est très difficile d'accéder aux rendements car l'analyse du milieu réactionnel est très complexe. D'où l'utilisation d'un mélange modèle

pour les essais de screening des catalyseurs dont le mode opératoire est le suivant.

Dans un réacteur de laboratoire il est introduit :

- 2,3 grammes de butylglycidyléther (BGE) à 95% de pureté soit 16,1 mmol,
- 7,5 grammes d'octaméthyltrisiloxane,
- 2,2 grammes d'acide acrylique à 99% pureté soit 31,6 mmol,
- 10 mg de 4-méthoxyphénol, et
- la quantité de catalyseur correspondante (voir tableau I).

Le milieu réactionnel est maintenu sous agitation et à la température souhaitée et balayé avec un courant d'air sec. Des prélèvements du milieu réactionnel sont réalisés et dosés par chromatographie en phase gazeuse pour évaluer le taux de conversion du butylglycidylether, le rendement en « hydroxyacrylate » (isomères $\alpha$ et $\beta$) qui est le produit recherché, le rendement en « diester-ol » qui est un sous-produit obtenu par l'addition de l'acide diacrylique, sous-produit de l'acide acrylique, et/ou de l'adduit de Michael de l'acide acrylique sur l'hydroxyacrylate et la dégradation de l'huile silicone (par pontage ou allongement de chaîne).

Les résultats sont présentés dans le tableau 1. La quantité de catalyseur est exprimée en % molaire par rapport au butylglycidylether (BGE), Les taux de conversion et rendements (Rdt) sont indiqués en % molaire par rapport au BGE. La dégradation de l'huile silicone est suivie par le taux de transformation (TT) de l'huile exprimé en % molaire.

Tableau 1

| Catalyseur | mol % | T (°C) | Durée réaction (h) | Taux conversion BGE (%) | Rdt hydroxyacrylate $\alpha$ et $\beta$ (%) | Rdt diester-ol (%) | Dégradation silicone TT (%) |
|---|---|---|---|---|---|---|---|
| $Cr(OAc)_3$ | 3 | 80 | 8 | 99,2 | 94 | 4 | NON |
| $Et_3N$ | 10 | 80 | 8 | 80 | 70 | | OUI (9%) |
| N-méthylmorpholine | 2 | 80 | 8 | 54 | 48 | 3,4 | OUI (2%) |
| TMG | 2 | 80 | 8 | 61 | 53 | 3,9 | OUI (4%) |
| $PPh_3$ | 5 | 80 | 8 | 95 | 81 | 9 | OUI (9%) |
| $BU_4NCl$ | 2 | 80 | 8 | 64 | 52 | 4,2 | OUI (5%) |
| 1-éthylimidazole | 2 | 80 | 8 | 62 | 56 | 4,3 | OUI (4%) |
| BMIBr | 2 | 80 | 8 | 65 | 57 | 4,4 | OUI (4%) |
| LiOH | 20 | 80 | 8 | 75 | 70 | 4,7 | OUI (1%) |
| KOH | 5 | 80 | 8 | 56 | 49 | 3,5 | OUI (2%) |
| Mg(Acrylate)2 | 5 | 80 | 8 | 59 | 53 | 4 | NON |
| Mg(Acrylate)2 | 5 | 110 | 8 | 88 | 76 | 8 | OUI (1%) |
| Ce(OAc)3 | 5 | 80 | 8 | 47 | 44 | 3 | NON |
| Ti(OnBu)4 | 3 | 80 | 5 | 98 | 86 | 5 | (0,3%) |
| Zn(Acrylate)2 | 5 | 80 | 8 | 7 | 7 | 0,6 | NON |
| Al(Acrylate)3 | 3 | 80 | 8 | 8 | 6 | 0,5 | OUI (1%) |
| $Fe(acac)_3$ | 10 | 80 | 8 | 62 | 58 | 3,6 | NON |
| $Fe(oct)_{2,4}(R_{50})_{0,8}$ | 1 | 80 | 8 | 15 | 12 | 0,3 | NON |
| $Fe(Acrylate)_3$ | 10 | 80 | 8 | 68,5 | 60,5 | 4,8 | NON |
| $Fe(Acrylate)_3$ | 5 | 110 | 8 | 90 | 80 | 6,2 | NON |
| $Fe(OTf)_3$ | 1 | 80 | 5 | 94* | 22 | 6 | ---------- |
| * Dégradation importante du BGE ; ------- non mesuré | | | | | | | |

Les bases fortes, que ce soit des bases organiques azotées, des bases au sens de Lewis ou les hydroxydes alcalins, présentent l'inconvénient de dégrader les huiles silicones via des réactions de coupure des chaînes siloxane, ce qui est rédhibitoire pour notre application.

Les sels métalliques ne présentent pas systématiquement cet inconvénient. Certains catalyseurs conduisent à de faibles taux de dégradation de silicone comme l'acrylate de magnésium ou d'aluminium ainsi que le titanate de butyle.

L'acrylate de fer (III) présente une bonne activité et sélectivité pour cette réaction malgré une faible solubilité dans le milieu d'où la nécessité d'employer des concentrations élevées en catalyseur. Le trifluorométhanesulfonate de fer (III) ou $Fe(OTf)_3$ dégrade fortement le butylglycidylether conduisant à un très faible rendement en produit souhaité. L'acétylacétonate de fer présente également une bonne activité et sélectivité en produit souhaité. Le complexe $Fe(oct)_{2,4}(R_{50})_{0,6}$ malgré sa faible concentration dans le milieu réactionnel permet d'obtenir une bonne sélectivité.

Des nouveaux essais ont été réalisés selon le même mode opératoire que les précédents en ajoutant au milieu réactionnel un mélange de solvants composé de 2,5 g de méthylisobutylcétone (MIBK) et 3g de n-butanol. Un nouveau sous-produit est quantifié, le « butoxy-ol » qui est le produit de réaction entre le solvant n-butanol et le butylglycidylether. Les résultats sont présentés dans le tableau 2 suivant. La quantité de catalyseur est exprimée en % molaire par rapport au butylglycidylether (BGE). Les taux de conversion et rendements (Rdt) sont indiqués en % molaire par rapport au BGE. Tous les essais ont été réalisés à une température de 80°C. La dégradation de l'huile silicone est suivie par le taux de transformation (TT) de l'huile exprimé en % molaire.

Tableau 2

| Catalyseur | mol % | Durée réaction (h) | Taux conversion BGE (%) | Rdt hydroxyacrylate $\alpha$ et $\beta$ (%) | Rdt Butoxy-ol (%) | Dégradation silicone TT (%) |
|---|---|---|---|---|---|---|
| $Cr(OAc)_3$ | 1 | 8 | 100 | 92 | 4,4 | Non |
| $Fe(Acrylate)_3$ | 3 | 3 | 99 | 95,7 | 3,9 | Non |
| $Fe(Acrylate)_3$ | 1,5 | 8 | 99,8 | 97,3 | 5,9 | Non |
| $Fe(OCH_2CH_3)_3$ | 3 | 3 | 99 | 95 | 4 | Non |
| $Fe(valerate)_3$ | 3 | 3 | 99,5 | 95 | 3,8 | Non |
| $Fe(2\text{-}EH)_3$ | 3 | 3 | 98,6 | 94,4 | 4,2 | Non |
| $Fe(stearate)_3$ | 3 | 3 | 99,3 | 95 | 4 | Non |
| $Fe(benzoate)_3$ | 3 | 3 | 99,3 | 94 | 4 | Non |
| $Fe(pivalate)_3$ | 3 | 3 | 99,3 | 96 | 3 | Non |
| Fe $(néononanoate)_3$ | 3 | 5 | 99 | 95 | 4,3 | Non |
| $Fe(ND)_3$ | 3 | 4,25 | 98,7 | 97,1 | 4,4 | Non |
| $Fe(naphténate)_3$ | 3 | 5 | 99,5 | 92 | 6,5 | Non |
| $Fe(TFA)_3$ | 3 | 4,5 | 99,4 | 82,6 | 4,4 | Non |
| $Fe_2O_3$ | 3 | 8 | 11 | 5,4 | 12,9 | Non |
| Fe° | 3 | 5 | 17 | 5 | 12 | Non |
| $Fe(OH)_3$ | 3 | 8 | 80,3 | 73,2 | 9,6 | Non |
| $FeCl_3$ anhydre | 3 | 3,5 | 99,5 | 60,2 | 29,8 | Oui (5%) |
| $FeCl_3.6H_2O$ | 3 | 3 | 98,7 | 69,1 | 19,5 | Oui (5%) |
| $Fe(acac)_3$ | 3 | 4 | 77,2 | 76,4 | 6,8 | Non |

Les différents carboxylates de fer allient une bonne cinétique de réaction, des rendements comparables à ceux obtenus avec l'acétate de chrome et souvent une meilleure sélectivité que dans le cas du chrome. De plus on ne constate aucune dégradation de l'huile silicone, Par exemple, avec l'acrylate de fer (III) on obtient avec une cinétique comparable à celle de l'acétate de chrome, en mettant en oeuvre une concentration en catalyseur légèrement supérieure, 1,5 mol% versus 1 mol%. Les quantités de sous-produits sont comparables.

L'éthylate de fer permet également d'obtenir des résultats très satisfaisants.

Certains composés de fer génèrent d'autres sous-produits (non décrits dans le tableau), comme le trifluoroacétate de fer dont les ligands trifluoroacétate sont transférés sur l'époxyde et occasionne une instabilité des produits formés, ou comme le trichlorure de fer qui non seulement génère des chlorhydrines et une quantité importante de butoxy-ol, mais aussi dégrade l'huile silicone.

L'oxyde et l'hydroxyde de fer présentent une réactivité faible et la quantité de de « butoxy-ol » formé est importante.

L'acétylacétonate de fer conduit à une réaction assez sélective même si la réactivité est un peu plus faible que celle obtenue avec les carboxylates de fer.

Une autre série d'essais a été réalisée avec une deuxième réaction modèle avec le même mode opératoire mais en diminuant la concentration en butylglycidylether et les teneurs en solvant solvant pour mimer une huile silicone plus longue et moins riche en fonctions époxyde. Les réactifs mis en jeu sont les suivants ;

- 1,18 grammes de butylglycidylether (BGE) à 95% de pureté,
- 8 grammes d'octaméthyltrisiloxane,
- 0,94 grammes d'acide acrylique à 99% de pureté,
- 1,36 grammes de MIBK,
- 1,6 grammes de 1-butanol,
- 10 mg de 4-méthoxyphénol, et
- la quantité de catalyseur correspondante (voir tableau 3).

Les résultats sont présentés dans le tableau 3 suivant. La quantité de catalyseur est exprimée en % molaire par rapport au butylglycidylether (BGE). Les taux de conversion et rendements (Rdt) sont indiqués en % molaire par rapport au BGE. Tous les essais ont été réalisés à une température de 90°C. La dégradation de l'huile silicone est suivie par le taux de transformation (TT) de l'huile exprimé en % molaire.

**Tableau 3**

| Catalyseur | mol % | Durée réaction (h) | Taux conversion BGE (%) | Rdt hydroxy-acrylate $\alpha$ et $\beta$ (%) | Rdt Butoxy-ol (%) | Dégradation silicone TT (%) |
|---|---|---|---|---|---|---|
| $Cr(OAc)_3$ | 1 | 5 | 100 | 93 | 3 | Non |
| $Fe(Acrylate)_3$ | 2 | 5 | 99,3 | 92 | 4,4 | Non |
| $Fe(OCH_2CH_3)_3$ | 2 | 5 | 98,4 | 92 | 4,9 | Non |
| $Fe(OBu)_3$ | 2 | 6 | 96 | 91 | 5 | Non |
| $Fe(pivalate)_3$ | 2 | 5 | 99,5 | 93 | 4,4 | Non |
| $Fe(néononanoate)_3$ | 2 | 5 | 97,3 | 91 | 5 | Non |
| $Fe(ND)_3$ | 2 | 5 | 98 | 91 | 5 | Non |
| $Fe(stearate)_3$ | 2 | 5 | 99,6 | 93 | 4,3 | Non |
| $Fe(naphténate)_3$ | 2 | 5 | 99 | 90 | 8 | Non |

2. Essais de préparation d'organopolysiloxane à fonction acrylate.

Dans un réacteur de 250 ml muni d'une agitation mécanique avec un mobile à 4 pâles inclinées, d'un réfrigérant, d'une arrivée d'air au niveau des pâles et d'une gaine thermométrique, sont chargés sous agitation :

- 100 g d'une huile polydiméthylsiloxane H avec une viscosité dynamique à 25 °C de 250 mPa.s. Cette huile contient

par molécule 7 motifs siloxyles comprenant un groupe hydrocarboné Y comprenant un groupe époxy et Y est le groupe hydrocarboné **(R-4)** de formule suivante :

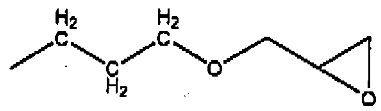

**(R-4)**

Le pourcentage en poids des groupes Y dans l'huile **H** est 10.5% et la teneur molaire en époxy dans l'huile **H** est de 95.3 mmol pour 100g.

- 10,41 g d'acide acrylique soit 144 mmol,
- 15 g de méthylisobutylcétone (MIBK),
- 18 g de 1-butanol,
- 0,08 g de méthylhydroquinone, et
- le catalyseur dont la teneur est exprimé en % molaire par rapport aux fonctions époxyde (voir tableau 4).

L'agitation est ajustée à 1000 tours/min, puis la double enveloppe du réacteur est chauffée à la température souhaitée pendant qu'un léger débit d'air est maintenu. Des prélèvements sont réalisés au cours du temps pour mesurer le taux de conversion des époxydes. Lorsqu'un taux supérieur à 96% est obtenu, le mélange est dévolatilisé sous vide (progressivement jusqu'à 1 mbar) tout en maintenant un léger bullage d'air. Après refroidissement, l'huile obtenue est filtrée sous pression sur filtre en cellulose. Les fonctions acrylate sont dosées par RMN $^1H$ à 85 mmol/100g.

Les résultats sont présentés dans le tableau 4 suivant.

**Tableau 4**

| Catalyseur | mol % | T (°C) | Durée réaction (h) | Taux conversion Epoxyde (%) |
|---|---|---|---|---|
| $Cr(OAc)_3$ | 1 | 90 | 4,75 | 99 |
| $Fe(Acrylate)_3$ | 2 | 90 | 5 | 97 |

Ces essais montrent que l'acrylate de fer (III) est un catalyseur efficace pour préparer des organopolysiloxanes à fonction acrylate selon le procédé de l'invention.

Une deuxième série d'essais a été réalisé à 105 °C selon le même mode opératoire en variant légèrement les quantités de réactifs :

- 101 g d'une huile polydiméthylsiloxane H telle que définie précédemment,
- 10,5 g d'acide acrylique,
- 10,6 g de méthylisobutylcétone (MIBK),
- 12,7 g de n-butanol,
- 0,08 g de méthylhydroquinone, et
- le catalyseur dont la teneur est exprimé en % molaire par rapport aux fonctions époxyde.

Les résultats sont présentés dans le tableau 5 suivant.

**Tableau 5**

| N° essai | Catalyseur | mol % | T (°C) | Durée réaction | Taux conversion Epoxyde (%) |
|---|---|---|---|---|---|
| A | $Cr(OAc)_3$ | 0.5 | 105 | 3h15 | 99,3 |
| B | $Fe(Acrylate)_3$ | 1.5 | 105 | 6h20 | 98 |
| C | $Fe(ND)_3$ | 1.5 | 105 | 4h15 | 99,9 |
| D | Fe(OEt)3 | 1.5 | 105 | 7h | 96 |
| E | Fe(OEt)3 | 1.5 | 115 | 3h15 | 99 |

Les deux carboxylates de fer (III) et l'alcoolate de fer (III) testés permettent d'obtenir une durée de réaction compatible avec une production industrielle.

3- Essais de préparation d'un revêtement anti-adhérent sur support souple

A 99 g de polyorganosiloxane à fonction acrylate A, B, ou C obtenus précédemment (voir tableau 5) on ajoute 1 g d'un photoamorceur radicalaire (Tego® A18, vendu par la socciété Evonik) et on obtient les formulations A1, B1 et C1. Chacune de ces formulations A1, B1 et C1 est enduite sur un film PET Lumirror® 60-21/36 de la société TORAY avec un taux de dépôt compris entre 0,9 et 1 $g/m^2$. Les échantillons de PET enduit (PET(A1), PET(B1) et PET(C1)) sont réticulés par une lampe UV de puissance 100 W/cm. La vitesse de défilement des échantillons enduits sous la lampe UV est de 50 m/min.

La qualité de la polymérisation a été évaluée pour les trois échantillons (PET(A1), PET(B1) et PET(C1)) par un test de Rub-off qui permet de contrôler l'aptitude de la formulation silicone à adhérer sur le support flexible par gommage en aller-retour du doigt. Ce test d'application est noté de 1, le plus faible, à 10, le meilleur résultat. Pour les trois échantillons une valeur de 10 a été obtenue.

Les trois échantillons de PET revêtus ont été soumis à un test d'application pour évaluer leur anti-adhérence via une mesure des forces de pelage. Pour cela, les trois échantillons ont été mis en contact avec un adhésif normé TESA®7475 dans les conditions de pression requises pendant 1 jour à température ambiante et 1 et 7 jours à 70°C selon la norme FINAT 11. Le tableau 6 suivant présente les forces de décollement mesurées en cN/inch.

Tableau 6

| Force de décollement (cN/inch) | PET (A1) | PET (B1) | PET (C1) |
|---|---|---|---|
| 1 jour à 23°C | 10 | 10 | 12 |
| 1 jour à 70°C | 11 | 12 | 12 |
| 7 jours à 70°C | 15 | 17 | 16 |

Les trois échantillons présentent de très bonnes performances anti-adhésives et on n'observe pas de différence entre les trois. Par conséquent le procédé selon l'invention permet d'obtenir des organopolysiloxanes fonctionnalisés par des groupes acrylates sans employer des catalyseurs à base de chrome pouvant être utilisés avec succès dans l'application anti-adhérence.

## Revendications

**1.** Procédé pour la préparation d'un organopolysiloxane A comportant au moins un groupe (méth)acrylate, ledit procédé comprenant les étapes suivantes:

a) on fait réagir à une température comprise entre 50 et 140°C, de préférence entre 70 et 130°C :

- au moins un organopolysiloxane B comprenant au moins un groupe époxy,
- avec de l'acide acrylique ou de l'acide méthacrylique ou un mélange des deux,
- en présence d'un catalyseur **C** qui est un complexe de fer au degré d'oxydation (III) de formule **(1)** suivante

$[Fe(L^1)_3]$ **(1)**

dans laquelle les symboles $L^1$, identiques ou différents, représentent un ligand choisi parmi le groupe constitué par : un anion β-dicarbonylato ou l'anion énolate d'un composé β-dicarbonylé, un anion carboxylate et un anion alcoolate, et

• d'au moins un solvant, et

b) on isole le produit obtenu qui est ledit organopolysiloxane **A** ou un mélange contenant majoritairement ledit organopolysiloxane **A.**

**2.** Procédé selon la revendication 1 dans lequel le catalyseur **C** est un complexe de fer au degré d'oxydation (III) de formule **(1)** suivante :

$$[Fe(L^1)_3] \qquad \textbf{(1)}$$

dans laquelle les symboles $L^1$, identiques ou différents, représentent un ligand choisi parmi le groupe constitué par un anion carboxylate et un anion alcoolate.

**3.** Procédé selon la revendication 2 dans lequel le catalyseur C est un carboxylate de fer (III) de formule **(1)** dans laquelle les symboles $L^1$ sont des ligands, identiques ou différents, choisis dans le groupe des anions carboxylates, ayant de 1 à 40 atomes de carbone.

**4.** Procédé selon la revendication 1 ou 2 dans lequel le catalyseur **C** est un alcoolate de fer (III) de formule (3) suivante:

$$Fe(OC_nH_{(2n+1)})_3 \qquad \textbf{(3)}$$

dans laquelle n est compris entre 2 et 6 et de préférence entre 2 et 5.

**5.** Procédé selon l'une quelconque des revendications précédentes dans lequel l'organopolysiloxane **B** comprend des motifs siloxyles **(I.4)** et **(I.5)** de formules suivantes:

$$Y_a Z^1_b SiO_{\frac{4-(a+b)}{2}} \qquad \textbf{(I.4)}$$

et

$$Z^2_c SiO_{\frac{4-c}{2}} \qquad \textbf{(I.5)}$$

dans lesquelles :

a= 1 ou 2, b= 0, 1 ou 2 et a+b= 1, 2 ou 3
c= 1, 2 ou 3

- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle, et
- ledit organopolysiloxane B comprend, par molécule, au moins deux atomes de silicium et au moins un motif siloxyle **(1.4).**

**6.** Procédé selon la revendication précédente dans lequel pour le motif siloxyle **(I.4)** le symbole Y est choisi parmi le groupe constitué par les groupes hydrocarbonés **(R-1)** à **(R-6)** de formules suivantes :

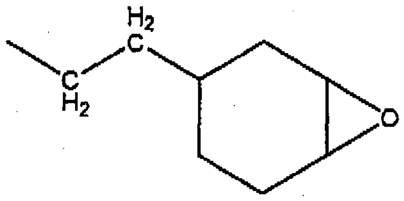

**(R-1)**

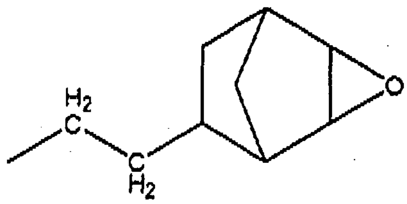

**(R-2)**

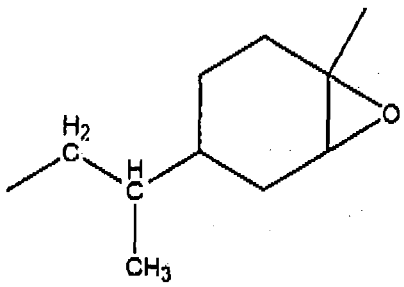

**(R-3)**

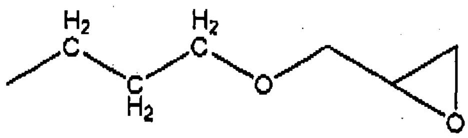

**(R-4)**

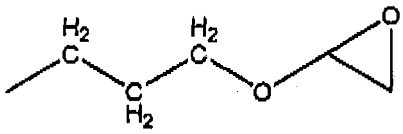

**(R-5)**

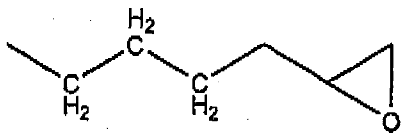

**(R-6)**

**7.** Procédé selon l'une quelconque des revendications précédentes dans lequel l'organopolysiloxane **B** contient de 1 à 60% poids de groupes hydrocarbonés Y comprenant un groupe époxy, de préférence de 1 à 30% poids et encore plus préférentiellement de 1 à 15% poids.

**8.** Procédé selon la revendication 1 dans lequel à l'étape a) le solvant est un solvant **S1** qui est un alcool primaire comprenant de 2 à 6 atomes de carbone.

**9.** Procédé selon la revendication 8 dans lequel l'étape a) a lieu en présence d'un deuxième solvant **S2** choisi parmi le groupe constitué par la méthylisobutylcétone, la méthyléthylcétone, le toluène, le xylène, le chlorobenzène et leurs mélanges.

**10.** Composition **X** précurseur dudit organopolysiloxane A obtenu par le procédé selon l'une quelconque des revendications 1 à 9 et stable au stockage à une température de 20°C, comprenant :

a. au moins un organopolysiloxane **B** comprenant au moins une fonction époxy,
b. de l'acide acrylique ou de l'acide méthacrylique ou un mélange des deux,
c. un catalyseur C qui est un complexe de fer au degré d'oxydation (III) de formule (1) suivante :

$$[Fe(L^1)_3] \qquad (1)$$

dans laquelle les symboles $L^1$, identiques ou différents, représentent un ligand choisi parmi le groupe constitué par: un anion β-dicarbonylato ou l'anion énolate d'un composé β-dicarbonylé, un anion carboxylate et un anion alcoolate et

d. au moins un solvant.

**11.** Procédé pour réaliser un revêtement sur un substrat comprenant les étapes suivantes:

a. on prépare un organopolysiloxane **A** selon le procédé de l'une quelconque des revendications 1 à 9,
b. on prépare une composition silicone **W** réticulable par voie radicalaire en ajoutant audit organopolysiloxane **A;**

i. un photoamorceur, et
ii. éventuellement au moins un additif,

c. on applique ladite composition **W** sur un substrat, et
d. on fait réticuler ladite composition **W** par exposition à un rayonnement.

**12.** Procédé selon la revendication 11 dans lequel le rayonnement est de la lumière ultraviolette,

**13.** Procédé selon les revendications 11 ou 12 dans lequel l'étape d) de réticulation a lieu à une température comprise entre 40 et 100°C.

**14.** Procédé selon les revendications 11 à 13 où le substrat est en textile, en papier, en polychlorure de vinyle, en polyester, en polypropylène, en polyamide, en polyéthylène, en polyéthylène téréphtalate, en polyuréthanne ou en fibres de verre non tissés.

**Patentansprüche**

**1.** Verfahren zur Herstellung eines Organopolysiloxans **A** mit mindestens einer (Meth)acrylatgruppe, wobei das Verfahren die folgenden Schritte umfasst:

a) man setzt bei einer Temperatur zwischen 50 und 140 °C, vorzugsweise zwischen 70 und 130 °C:

• mindestens ein Organopolysiloxan **B** mit mindestens einer Epoxidgruppe
• mit Acrylsäure oder Methacrylsäure oder einer Mischung davon
• in Gegenwart eines Katalysators **C,** bei dem es sich um einen Komplex von Eisen in der Oxidationsstufe (III) der folgenden Formel (1) handelt:

$$[Fe(L^1)_3] \qquad \textbf{(1)}$$

wobei die Symbole $L^1$ gleich oder verschieden sind und für einen Liganden aus der Gruppe bestehend aus einem β-Dicarbonylato-Anion oder dem Enolat-Anion einer β-Dicarbonylverbindung, einem Carboxylat-Anion und einem Alkoholat-Anion stehen,
• mindestens eines Lösungsmittels um und

b) isoliert das erhaltene Produkt, bei dem es sich um das Organopolysiloxan **A** oder ein Gemisch, das hauptsächlich das Organopolysiloxan **A** enthält, handelt.

**2.** Verfahren nach Anspruch 1, wobei es sich bei dem Katalysator **C** um einen Komplex von Eisen in der Oxidationsstufe (III) der folgenden Formel (1) handelt:

$$[Fe(L^1)_3] \qquad \textbf{(1)}$$

wobei die Symbole $L^1$ gleich oder verschieden sind und für einen Liganden aus der Gruppe bestehend aus einem Carboxylat-Anion und einem Alkoholat-Anion stehen.

**3.** Verfahren nach Anspruch 2, wobei es sich bei dem Katalysator **C** um ein Eisen(III)-carboxylat der Formel **(1)** handelt, wobei die Symbole $L^1$ für gleiche oder verschiedene Liganden aus der Gruppe der Carboxylat-Anionen mit 1 bis 40 Kohlenstoffatomen stehen.

**4.** Verfahren nach Anspruch 1 oder 2, wobei es sich bei dem Katalysator **C** um ein Eisen(III)-alkoholat der folgenden

Formel **(3)** handelt:

$$Fe(OC_nH_{(2n+1)})_3 \qquad \textbf{(3)}$$

wobei n zwischen 2 und 6 und vorzugsweise zwischen 2 und 5 liegt.

**5.** Verfahren nach einem der vorhergehenden Ansprüche, wobei das Organopolysiloxan **B** Siloxyleinheiten **(I.4)** und **(I.5)** der folgenden Formeln

$$Y_aZ^1_bSiO_{\frac{4-(a+b)}{2}} \qquad \textbf{(I.4)}$$

und

$$Z^2_cSiO_{\frac{4-c}{2}} \qquad \textbf{(I.5)}$$

umfasst, wobei

a = 1 oder 2, b = 0, 1 oder 2 und a+b = 1, 2 oder 3,
c = 1, 2 oder 3,

- die Symbole Y gleich oder verschieden sind und für eine Kohlenwasserstoffgruppe mit einer Epoxidgruppe und gegebenenfalls außerdem einem oder mehreren Heteroatomen wie einem Sauerstoffatom stehen, wobei die Kohlenwasserstoffgruppe Y vorzugsweise 2 bis 20 Kohlenstoffatome inklusive aufweist und Y noch weiter bevorzugt aus der Gruppe bestehend aus einem Alkylglycidylether, einem linearen, verzweigten oder cyclischen Epoxyalkyl, einem linearen, verzweigten oder cyclischen Epoxyalkenyl und einem Carbonsäureglycidylester ausgewählt ist;
- die Symbole $Z^1$ und $Z^2$ gleich oder verschieden sind und für eine einwertige Kohlenwasserstoffgruppe mit 1 bis 30 Kohlenstoffatomen stehen, vorzugsweise aus der Gruppe bestehend aus Alkylgruppen mit 1 bis 8 Kohlenstoffatomen und Arylgruppen mit 6 bis 12 Kohlenstoffatomen ausgewählt sind und noch weiter bevorzugt aus der Gruppe bestehend aus einer Methyl-, Ethyl-, Propyl-, 3,3,3-Trifluorpropyl-, Xylyl-, Tolyl- und Phenylgruppe ausgewählt sind, und
- das Organopolysiloxan **B** pro Molekül mindestens zwei Siliciumatome und mindestens eine Siloxyleinheit **(I.4)** umfasst.

**6.** Verfahren nach dem vorhergehenden Anspruch, wobei für die Siloxyleinheit **(I.4)** das Symbol aus der Gruppe bestehend aus den Kohlenwasserstoffgruppen **(R-1)** bis **(R-6)** der folgenden Formeln ausgewählt ist:

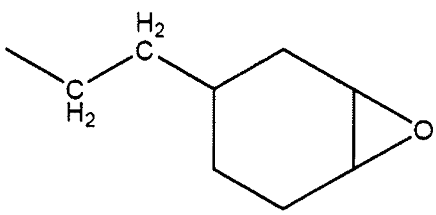

**(R-1)**

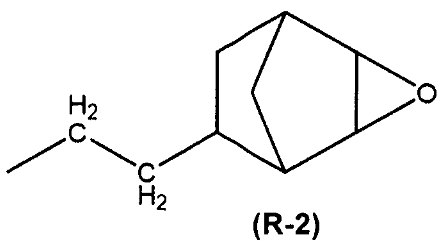

**(R-2)**

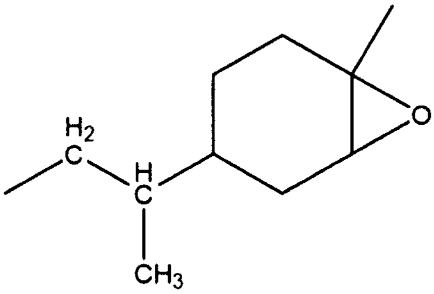

(R-3)

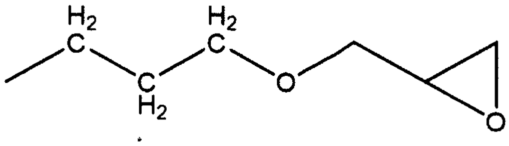

(R-4)

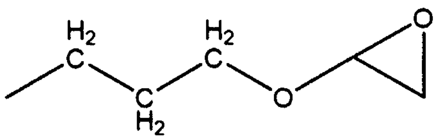

(R-5)

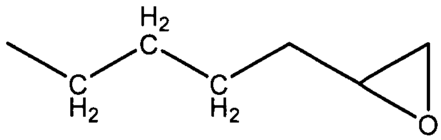

(R-6)

**7.** Verfahren nach einem der vorhergehenden Ansprüche, wobei das Organopolysiloxan **B** 1 bis 60 Gew.-% Kohlenwasserstoffgruppen Y mit einer Epoxidgruppe, vorzugsweise 1 bis 30 Gew.-% und noch weiter bevorzugt 1 bis 15 Gew.-%, enthält.

**8.** Verfahren nach Anspruch 1, wobei es sich in Schritt a) bei dem Lösungsmittel um ein Lösungsmittel **S1** handelt, bei dem es sich um einen primären Alkohol mit 2 bis 6 Kohlenstoffatomen handelt.

**9.** Verfahren nach Anspruch 8, wobei Schritt a) in Gegenwart eines zweiten Lösungsmittels **S2** aus der Gruppe bestehend aus Methylisobutylketon, Methylethylketon, Toluol, Xylol, Chlorbenzol und Mischungen davon erfolgt.

**10.** Zusammensetzung **X,** die eine Vorstufe des durch das Verfahren nach einem der Ansprüche 1 bis 9 erhaltenen Organopolysiloxans A darstellt und bei einer Temperatur von 20 °C lagerstabil ist, umfassend:

a. mindestens ein Organopolysiloxan **B** mit mindestens einer Epoxidfunktion,
b. Acrylsäure oder Methacrylsäure oder eine Mischung davon,
c. einen Katalysator **C,** bei dem es sich um einen Komplex von Eisen in der Oxidationsstufe (III) der folgenden Formel (1) handelt:

$$[Fe(L^1)_3] \qquad \textbf{(1)}$$

wobei die Symbole $L^1$ gleich oder verschieden sind und für einen Liganden aus der Gruppe bestehend aus einem β-Dicarbonylato-Anion oder dem Enolat-Anion einer β-Dicarbonylverbindung, einem Carboxylat-Anion und einem Alkoholat-Anion stehen, und
d. mindestens ein Lösungsmittel.

**11.** Verfahren zur Herstellung einer Beschichtung auf einem Substrat, das die folgenden Schritte umfasst:

a. man stellt nach dem Verfahren gemäß einem der Ansprüche 1 bis 9 ein Organopolysiloxan **A** her,
b. man stellt eine radikalisch vernetzbare Silikonzusammensetzung **W** her, indem man

i. einen Photoinitiator und
ii. gegebenenfalls mindestens ein Additiv zu dem Organopolysiloxan **A** gibt,

c. man bringt die Zusammensetzung **W** auf ein Substrat auf und
d. man vernetzt die Zusammensetzung **W** durch Einwirkenlassen einer Strahlung.

**12.** Verfahren nach Anspruch 11, wobei es sich bei der Strahlung um Ultraviolettlicht handelt.

**13.** Verfahren nach Anspruch 11 oder 12, wobei der Vernetzungsschritt d) bei einer Temperatur zwischen 40 und 100 °C erfolgt.

**14.** Verfahren nach den Ansprüchen 11 bis 13, wobei das Substrat aus Textilstoff, Papier, Polyvinylchlorid, Polyester, Polypropylen, Polyamid, Polyethylen, Polyethylenterephthalat, Polyurethan oder Glasfaservliesstoffen besteht.

**Claims**

**1.** Process for producing an organopolysiloxane **A** comprising at least one (meth)acrylate group, said process comprising the following steps:

a) the following are reacted at a temperature of between 50 and 140°C, preferably between 70 and 130°C:

- at least one organopolysiloxane **B** comprising at least one epoxy group,
- with acrylic acid or methacrylic acid or a mixture of the two,
- in the presence of a catalyst **C** which is a complex of iron in the oxidation state (III), of formula **(1)** below:

$$[Fe(L^1)_3] \qquad \textbf{(1)}$$

in which the symbols $L^1$, which may be identical or different, represent a ligand chosen from the group made up of: a β-dicarbonylato anion or the enolate anion of a β-dicarbonyl compound, a carboxylate anion and an alkoxide anion, and

- of at least one solvent, and

b) the product obtained, which is said organopolysiloxane **A** or a mixture containing predominantly said organopolysiloxane **A,** is isolated.

**2.** Process according to Claim 1, wherein the catalyst **C** is a complex of iron in the oxidation state (III), of formula **(1)** below:

$$[Fe(L^1)_3] \qquad \textbf{(1)}$$

in which the symbols $L^1$, which may be identical or different, represent a ligand chosen from the group made up of a carboxylate anion and an alkoxide anion.

**3.** Process according to Claim 2, wherein the catalyst **C** is an iron (III) carboxylate of formula **(1)** in which the symbols $L^1$ are ligands, which may be identical or different, chosen from the group of carboxylate anions, having from 1 to 40 carbon atoms.

**4.** Process according to Claim 1 or 2, wherein the catalyst **C** is an iron(III) alkoxide of formula **(3)** below:

$$Fe(OC_nH_{(2n+1)})_3 \qquad \textbf{(3)}$$

in which n is between 2 and 6 and preferably between 2 and 5.

**5.** Process according to any one of the preceding claims, wherein the organopolysiloxane **B** comprises siloxyl units **(I.4)** and **(I.5)** having the formulae below:

$$Y_a Z^1_b SiO_{\frac{4-(a+b)}{2}} \qquad \textbf{(I.4)}$$

and

$$Z^2_cSiO_{\frac{4-c}{2}} \quad \textbf{(I.5)}$$

in which:

a = 1 or 2, b = 0, 1 or 2 and a+b = 1, 2 or 3,
c = 1, 2 or 3,

- the symbols Y, which may be identical or different, represent a hydrocarbon-based group comprising an epoxy group and optionally also comprising one or more heteroatoms such as an oxygen atom, said hydrocarbon-based group Y preferably having from 2 to 20 carbon atoms inclusive, and even more preferentially Y is chosen from the group made up of an alkyl glycidyl ether, a linear, branched or cyclic epoxy alkyl, a linear, branched or cyclic epoxy alkenyl and a carboxylic acid glycidyl ester;
- the symbols $Z^1$ and $Z^2$, which may be identical or different, represent a monovalent hydrocarbon-based group having from 1 to 30 carbon atoms, preferably chosen from the group made up of alkyl groups having from 1 to 8 carbon atoms and aryl groups having from 6 to 12 carbon atoms, and even more preferentially chosen from the group made up of a methyl, ethyl, propyl, 3,3,3-trifluoropropyl, xylyl, tolyl and phenyl group, and
- said organopolysiloxane **B** comprises, per molecule, at least two silicon atoms and at least one siloxyl unit **(I.4).**

**6.** Process according to the preceding claim, wherein, for the siloxyl unit **(I.4),** the symbol Y is chosen from the group made up of the hydrocarbon-based groups **(R-1)** to **(R-6)** having the formulae below:

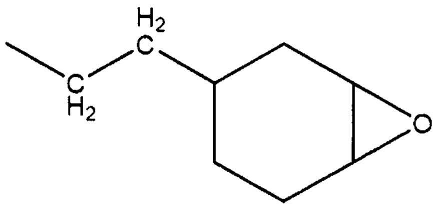

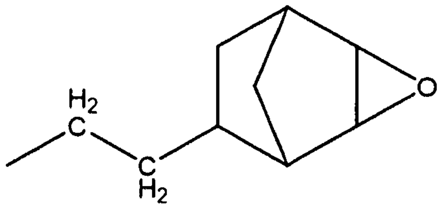

**(R-1)**

**(R-2)**

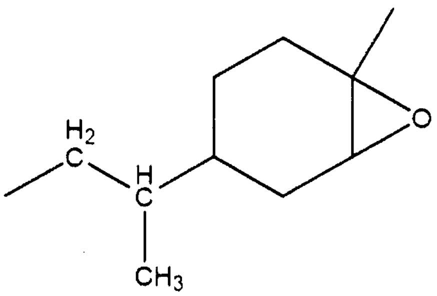

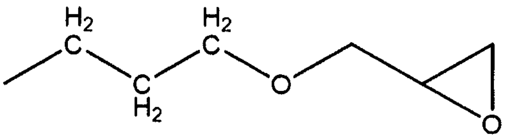

**(R-3)**

**(R-4)**

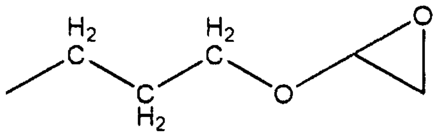

(R-5)

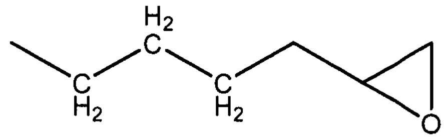

(R-6)

7. Process according to any one of the preceding claims, wherein the organopolysiloxane **B** contains from 1% to 60% by weight of hydrocarbon-based groups Y comprising an epoxy group, preferably from 1% to 30% by weight and even more preferentially from 1% to 15% by weight.

8. Process according to Claim 1, wherein, in step a), the solvent is a solvent **S1** which is a primary alcohol comprising from 2 to 6 carbon atoms.

9. Process according to Claim 8, wherein step a) is carried out in the presence of a second solvent **S2** chosen from the group made up of methyl isobutyl ketone, methyl ethyl ketone, toluene, xylene, chlorobenzene and mixtures thereof.

10. Composition **X** which is a precursor of said organopolysiloxane A obtained by means of the process according to any one of Claims 1 to 9 and stable with respect to storage at a temperature of 20°C, comprising:

a. at least one organopolysiloxane **B** comprising at least one epoxy function,
b. acrylic acid or methacrylic acid or a mixture of the two,
c. a catalyst **C** which is a complex of iron in the oxidation state (III), of formula (1) below:

$$[Fe(L^1)_3] \qquad (1)$$

in which the symbols $L^1$, which may be identical or different, represent a ligand chosen from the group made up of: a β-dicarbonylato anion or the enolate anion of a β-dicarbonyl compound, a carboxylate anion and an alkoxide anion, and
d. at least one solvent.

11. A process for producing a coating on a substrate, comprising the following steps:

a. an organopolysiloxane **A** is produced according to the process of any one of Claims 1 to 9,
b. a radical-crosslinkable silicone composition **W** is produced by adding, to said organopolysiloxane **A;**

i. a photoinitiator, and
ii. optionally at least one additive,

c. said composition **W** is applied on a substrate, and
d. said composition **W** is crosslinked by exposure to radiation.

12. Process according to Claim 11, wherein the radiation is ultraviolet light.

13. Process according to Claim 11 or 12, wherein the crosslinking step d) is carried out at a temperature of between 40 and 100°C.

14. Process according to Claims 11 to 13, wherein the substrate is made of textile, of paper, of polyvinyl chloride, of polyester, of polypropylene, of polyamide, of polyethylene, of polyethylene terephthalate, of polyurethane or of nonwoven glass fibers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1276825 B1
- US 4908274 A
- US 4293678 A
- US 4558082 A
- EP 0269114 A
- EP 2574638 A
- US 4777233 A
- US 2001056157 A
- US 4324873 A
- FR 1435882 A
- EP 281718 A
- FR 2632960
- EP 940458 A

### Littérature non-brevet citée dans la description

- Makromol. Chem. *RAPID COMMUN,* 1986, vol. 7, 703-707